# EUROPÄISCHE PATENTSCHRIFT

(11) **EP 2 963 403 B1**
(45) Veröffentlichungstag und Bekanntmachung des Hinweises auf die Patenterteilung: **01.08.2018**
(21) Anmeldenummer: 15172781.5
(22) Anmeldetag: 18.06.2015
(51) Int. Cl.: G01L 1/22, G01L 1/26

(54) **AUF SCHERPRINZIP BASIERENDES KRAFTAUFNEHMERSYSTEM MIT ÜBERLASTSCHUTZ**
FORCE TRANSDUCER SYSTEM BASED ON THE SHEARING PRINCIPLE WITH OVERLOAD PROTECTION
SYSTEME DE PRISE DE FORCE SELON LE PRINCIPE DE CISAILLEMENT DOTE D'UNE PROTECTION CONTRE LES SURCHARGES

(30) Priorität: 03.07.2014 DE 102014109301
(43) Veröffentlichungstag der Anmeldung: 06.01.2016
(73) Patentinhaber: Brosa AG, 88069 Tettnang (DE)
(72) Erfinder: Igel, Raimund, 88069 Tettnang (DE)
(74) Vertreter: Witte, Weller & Partner Patentanwälte mbB

(56) Entgegenhaltungen:
- EP-A1- 2 538 189
- GB-A- 2 452 939
- US-A- 3 695 096

## Beschreibung

Die vorliegende Erfindung betrifft ein Kraftaufnehmersystem mit einem Hülsenkörper, in welchem koaxial ein Bolzenkörper angeordnet ist, wobei das Kraftaufnehmersystem ausgelegt ist, durch Scherkräfte hervorgerufene Verformungen insbesondere mittels Dehnungsmessstreifen (DMS) zu messen, wobei zu messende Kräfte von außen schräg zu einer Längsachse des Systems einwirken. Das Kraftaufnehmersystem misst nach dem Scherprinzip, um größere Kräfte messen zu können, als es mit nach dem Biege-(Balken-)Prinzip möglich wäre.

Herkömmliche Kraftaufnehmer weisen einen Messkörper, vorzugsweise aus Stahl auf, der an einer oder mehreren Stellen hinsichtlich seiner Materialstärke geschwächt ist, um dort eine membranartige Zone auszubilden, wo eine Messzelle angeordnet ist, um durch mechanische Verformung hervorgerufene Dehnungen und/oder Stauchungen (Biegung) zu messen, aus denen auf eine die Dehnungen und/oder Stauchungen verursachende Kraft rückgeschlossen werden kann.

Je nach Anwendung werden meistens sogenannte Messachsen (siehe z.B. DE 103 02 349 B3, DE 103 02 352 A1, WO 2008/110360 A1 oder DE 102 45 768 A1) oder Messhülsen (siehe z.B. EP 2 538 189 A1) eingesetzt. Die herkömmlichen Messachsen und Messhülsen weisen in der Regel einen zylindrischen Körper auf. Die Messhülsen sind Hohlzylinder, in welche kundenseitig bereitgestellte (Maschinen-)Achsen, vorzugsweise formschlüssig, einführbar sind. Die Messachsen sind ein- oder mehrteilige Zylinder, die in kundenseitig vorgegebene Bauräume eingeführt werden. Klassische Anwendungsbeispiele sind Seilrollen, wie sie z.B. bei Aufzügen oder Kränen eingesetzt werden.

Das Dokument US 4,899,599 A offenbart einen Überlastschutz, wobei in der Fig. 1 des genannten Dokuments ein Stiftglied 88 mit einem Ende 90 gezeigt ist, das in eine Bohrung 92 in einer Wand 28 eingeführt ist.

Ein grundsätzliches Problem ist darin zu sehen, dass die für die Kraftaufnehmer zur Verfügung stehenden Bauräume hinsichtlich ihrer Dimensionen meistens durch die Kunden (Anwender) fest vorgegeben sind. Ferner geben die Kunden Größenordnungen der zu messenden Kräfte fest vor. Kräfte von bis zu 25 t lassen sich mit herkömmlichen Messhülsen ohne größere Probleme unter Biegung messen. Höhere Kräfte müssen nach dem Scher-Prinzip gemessen werden.

Kraftaufnehmer, die Scherkräfte messen, sind gegenüber Überlasten fehleranfälliger als Kraftaufnehmer, die Biegekräfte (Dehnung/Stauchung) messen. Als Beispiel wird in diesem Zusammenhang ein Kraftaufnehmer für einen Bagger genannt, der zur Handhabung von Schrott eingesetzt wird. In einem Stampfbetrieb kann es zu hohen Überlasten in einer negativen Messrichtung kommen, wenn der Bagger den Schrott zusammenpresst (negative Messrichtung), anstatt den Schrott lediglich anzuheben und umzusetzen (positive Messrichtung). Außerdem werden derartige Bagger oft auch zu anderen Zwecken eingesetzt, wie z.B. zum Ziehen von Güterwaggons, wobei die ausgeübte Kraft in einem ungewöhnlichen Winkel (z.B. 45° zur Horizontalen) wirkt. Überschreiten die Kräfte einen vorbestimmten Schwellenwert (z.B. 150% der Nennlast), kann sich eine Kalibrierung des Messsystems dauerhaft ändern. Ein Nullpunkt des Messssystems (z.B. DMS in Wheatstonescher Brückenschaltung inkl. Signalverstärker und ggf. Auswerteeinheit) kann sich unter Überlasten dauerhaft verschieben, so dass eine herstellerseitige Kalibrierung nicht mehr gegeben ist.

Ferner können sich Materialeigenschaften des Kraftaufnehmers bei Überlasten dauerhaft derart verändern (z.B. plastische Verformung), dass keine auswertbaren elektrischen Messsignale mehr von den Messsensoren (DMS) geliefert werden können. Der Kraftaufnehmer bzw. der Sensor ist dann defekt.

Es ist daher eine Aufgabe der vorliegenden Erfindung, ein Kraftaufnehmersystem bereitzustellen, das durch Scherkräfte hervorgerufene Verformungen im Kraftaufnehmer bei sehr hohen Kräften misst und gegenüber Überlasten geschützt ist.

Diese Aufgabe wird durch ein Kraftaufnehmersystem zum Messen einer Kraft unter Scherung gelöst, wobei die Kraft im Wesentlichen von außen in einer radialen Richtung quer auf eine Längsachse des Kraftaufnehmersystems wirkt, mit: einem zylindrischen, radial innen positionierbaren Bolzenkörper; und einem hohlzylindrischen, radial außen positionierbaren Hülsenkörper, der sich koaxial zur Längsachse erstreckt und der zur koaxialen Aufnahme des Bolzenkörpers eingerichtet ist, wobei der Hülsenkörper aufweist: zumindest einen stirnseitigen, in einer axialen Richtung außen liegenden ersten Abschnitt zum Lagern des Kraftaufnehmersystems; mindestens einen zweiten Abschnitt zum Messen der Kraft; und mindestens einen dritten Abschnitt zum radialen Einleiten der Kraft in das Kraftaufnehmersystem; wobei der Bolzenkörper formschlüssig im ersten Abschnitt positionierbar ist und wobei eine Oberfläche des Bolzenkörpers eine in einer Umfangsrichtung orientierte Mantelfläche und zwei sich axial gegenüberliegende Stirnflächen aufweist; wobei der zweite Abschnitt radial außen und/oder innen eine umfänglich verlaufende Nut aufweist, so dass in axialer Richtung jeweils eine Stufe zwischen dem ersten Abschnitt und dem zweiten Abschnitt sowie zwischen dem zweiten Abschnitt und dem dritten Abschnitt ausgebildet ist, und wobei der zweite Abschnitt zur radialen Aufnahme von mindestens einer Messzelle eingerichtet ist; wobei der dritte Abschnitt eine axiale Länge, eine radial außen liegende Außenwandung und eine radial innen liegenden Innenwandung aufweist und wobei der dritte Abschnitt in einem unbelasteten Zustand, in welchen die Kraft nicht wirkt, über seine gesamte axiale Länge radial zum Bolzenkörper beabstandet ist, so dass der Bolzenkörper berührungslos innerhalb des dritten Abschnitts positionierbar ist, wobei der zweite Abschnitt, der dritte Abschnitt und der Bolzenkörper zwischen sich einen radial und axial innerhalb des Kraftaufnehmersystems angeordneten Verformungsraum definieren, in welchen der Hülsenkörper in einem belasteten Zustand, in welchem die Kraft auf das Kraftaufnehmersystem wirkt, ausweichen kann, um den zweiten Abschnitt unter Scherung zu verformen; dadurch gekennzeichnet, dass die Innenwandung des dritten Abschnitts - oder ein Bereich der Mantelfläche des Bolzenkörper, der radial gegenüberliegend zur Innenwandung des dritten Abschnitts positionierbar ist - zumindest einen radial in den Verformungsraum vorstehenden Vorsprung aufweist, so dass die Innenwandung des dritten Abschnitts vorzugsweise nur über den Vorsprung mit der Mantelfläche Bolzenkörpers in Kontakt tritt, wenn die Kraft einen Überlast-Schwellenwert erreicht.

Der nach dem Scherprinzip messende Kraftaufnehmer ist gegenüber Überlasten mechanisch geschützt, die insbesondere entgegen einer Vorzugsrichtung der unter Normalbedingungen eingeleiteten Kraft wirkt. Dies wird dadurch erreicht, dass in dem Bereich des Kraftaufnehmersystems, wo die zu messende Kraft eingeleitet wird, ein Anschlag (Vorsprung) vorgesehen ist, der die mechanische Verformung des Kraftaufnehmers, insbesondere des Hülsenkörpers, in der Richtung begrenzt, in der die zu messende Kraft im Wesentlichen wirkt, also radial. Dadurch wird eine mechanische Beschädigung des Messsystems, d.h. des vorzugsweise elektrischen Messsensors, der die mechanische Verformung des Messkörpers in ein elektrisches Signal umwandelt, verhindert. Eine Verschiebung des Nullpunkts wird verhindert. Eine erneute Kalibrierung des Gesamtsystems ist nicht erforderlich, selbst wenn das System unter Überlast betrieben wird.

Vorzugsweise ist jeder der radialen Vorsprünge in der Umfangsrichtung kontinuierlich ausgebildet.

Wenn der oder die Vorsprünge vollumfänglich ausgebildet sind, kann die zu messende Kraft bzw. die Überlast aus jeder Richtung auf das System einwirken. Es ist nicht erforderlich, dass die zu messende Kraft entlang der Vorzugsrichtung einwirkt. Das System ist in allen Richtungen geschützt.

Ferner ist es von Vorteil, wenn der Hülsenkörper und der Bolzenkörper drehfest zueinander positionierbar sind. In diesem Fall ist insbesondere der mindestens eine radiale Vorsprung in der Umfangsrichtung punktuell ausbildbar und kann entlang einer Vorzugsrichtung der Kraft angeordnet werden.

Somit ist es nicht erforderlich, dass jeder der Vorsprünge vollumfänglich ausgebildet ist. Die Vorsprünge können diskret, d.h. punktuell, ausgebildet sein. Die punktuellen Vorsprünge liegen dann in der Verlängerung der Richtung, in welcher die zu messende Kraft auf das System einwirkt.

Bei einer weiteren bevorzugten Ausgestaltung weist der Hülsenkörper zwei erste Abschnitte und zwei zweite Abschnitte auf, die spiegelsymmetrisch zum dritten Abschnitt angeordnet sind, wobei der dritte Abschnitt axial mittig zwischen den zweiten Abschnitten angeordnet ist.

Diese Geometrie unterstützt die Messung nach dem Scherprinzip. Der dritte Abschnitt, in welchen die Kraft eingeleitet wird, verformt sich entgegengesetzt zum ersten Abschnitt, der als Auflager wirkt. Der zweite Abschnitt verformt sich dann immer unter Scherung.

Insbesondere sind ein erster und ein zweiter radialer Vorsprung vorgesehen, die in der axialen Richtung direkt auf die zweiten Abschnitte folgen.

Da die Messzellen im Bereich der zweiten Abschnitte vorgesehen sind, wird durch die Positionierung der Vorsprünge sichergestellt, dass beim Erreichen der Überlast die mechanische Verformung im Bereich des zweiten Abschnitts sofort unterbunden wird.

Ferner ist es von Vorteil, wenn mindestens vier Messzellen vorgesehen sind und wenn jeder der zweiten Abschnitte zur Aufnahme von mindestens zwei der mindestens vier Messzellen eingerichtet ist, wobei sich die mindestens zwei Messzellen vorzugsweise jeweils diametral zur Längsachse gegenüberliegen.

Durch das Vorsehen mehrerer Messzellen kann die Messgenauigkeit erhöht werden. Es ist möglich, aus den Messsignalen sowohl eine Richtung abzuleiten, aus der die Kraft auf das System einwirkt, als auch eine absolute Größe der Kraft zu bestimmen.

In diesem Fall werden die mindestens zwei Messzellen insbesondere jeweils in der Umfangsrichtung so angeordnet, dass eine virtuelle Verbindungslinie zwischen den mindestens zwei Messzellen einen rechten Winkel mit der Kraft definiert, wenn man das Kraftaufnehmersystem in axialer Richtung betrachtet.

Auch ist es wünschenswert, die Messachse zweiteilig auszubilden, wobei der Hülsenkörper den Bolzenkörper koaxial in sich aufnimmt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine teilweise geschnittene dargestellte Seitenansicht eines Kraftaufnehmersystems gemäß der Erfindung;
- Fig. 2: eine perspektivische Seitenansicht des Kraftaufnehmersystems;
- Fig. 3: eine teilweise geschnitten dargestellte Ansicht entlang eines Pfeils III der Fig. 2;
- Fig. 4: eine Schnittansicht einer ersten Ausführungsform eines Verformungsraums;
- Fig. 5: eine Schnittansicht einer zweiten Ausführungsform eines Verformungsraums;
- Fig. 6: eine Schnittansicht einer dritten Ausführungsform eines Verformungsraums; und
- Fig. 7: eine Schnittansicht eines Kraftaufnehmers im Überlastzustand.

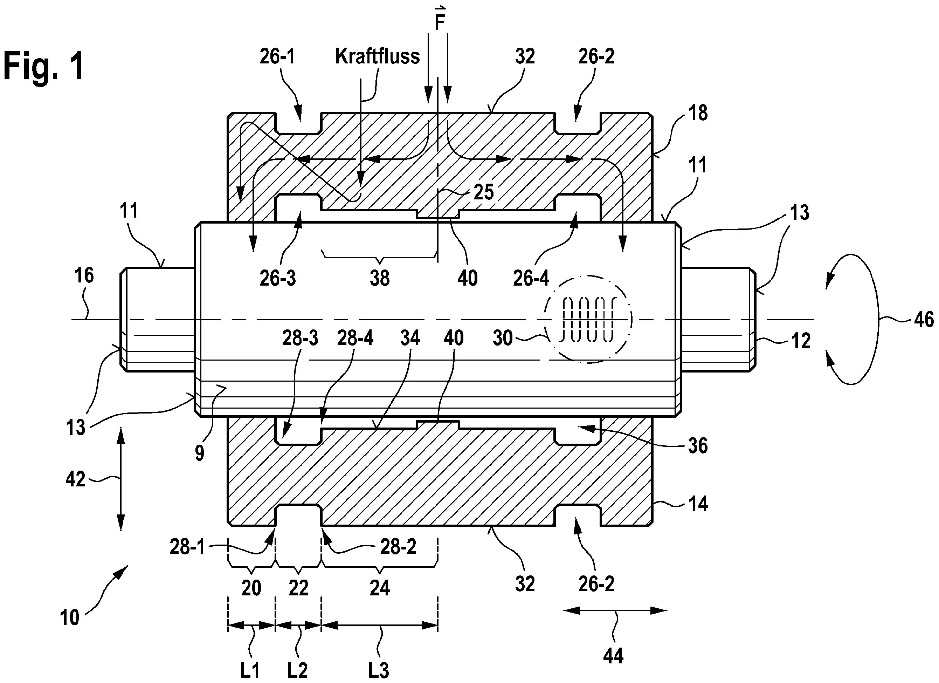

Fig. 1 zeigt eine teilweise geschnitten dargestellte Seitenansicht eines Kraftaufnehmersystems 10 gemäß der Erfindung. Das Kraftaufnehmersystem 10 wird nachfolgend kurz auch nur als "System" 10 bezeichnet werden.

Das System 10 weist einen Bolzenkörper 12 und einen Hülsenkörper 14 auf. Der Bolzenkörper 12 und der Hülsenkörper 14 sind koaxial zu einer Längsachse 16 des Systems 10 angeordnet. Der Bolzenkörper 12 ist radial innen angeordnet. Der Hülsenkörper 14 ist radial außen angeordnet.

Das System 10 wird dazu verwendet, Kräfte F zu messen, die im Wesentlichen quer zur Längsachse 16 des Systems 10 radial von außen auf den Hülsenkörper 14 einwirken. Der Begriff "im Wesentlichen quer" umfasst auch Kraftrichtungen, die nicht unmittelbar senkrecht zur Längsachse 16 auf das System 10 einwirken. Die Kraft F kann beispielsweise auch in einem Winkelbereich von ± 45° relativ zur Senkrechten zur Längsachse 16 einwirken. Außerdem ist es nicht erforderlich, dass die Kraft F exakt axial mittig auf das System 10 einwirkt, wie es exemplarisch in der Fig. 1 gezeigt ist. Die Kraft F kann auch axial außermittig auf das System 10 einwirken. Angriffspunkt und Angriffswinkel können also variieren.

Der Bolzenkörper 12 ist vorzugsweise massiv ausgebildet. Der Bolzenkörper 12 hat eine im Wesentlichen zylindrische Form. Eine (Gesamt-)Oberfläche 9 des Bolzenkörpers 12 umfasst mindestens eine sich in einer Umfangsrichtung 46 erstreckende Mantelfläche 11 sowie mindestens zwei axial außenliegende Stirnflächen 13. Die Stirnflächen 13 erstrecken sich in Ebenen, die senkrecht zur Längsachse 16 orientiert sind. Die Stirnflächen 13 erstrecken sich in einer axialen Richtung 44.

Stirnflächen 18 des hohlzylindrischen Hülsenkörpers 14 erstrecken sich ebenfalls radial und parallel zu den Stirnflächen 13 des Bolzenkörpers 12. Es versteht sich, dass die Stirnflächen 13 und 14 nicht zwingend senkrecht zur Längsachse 16 ausgerichtet sein müssen. Die Stirnflächen 13 und 14 können beispielsweise auch schräg orientiert sein.

Der hohlzylindrische Hülsenkörper 14 weist in einer axialen Richtung 44 mindestens einen ersten Abschnitt 20, mindestens einen zweiten Abschnitt 22 und mindestens einen dritten Abschnitt 24 auf. Das System der Fig. 1 weist z.B. zwei, jeweils stirnseitig axial außen liegende erste Abschnitte 20 auf. Das System 10 weist ferner zwei zweite Abschnitte 22 und zwei dritte Abschnitte 24 auf, die spiegelbildlich zu einer Symmetrieebene 25 angeordnet sind, die wiederum senkrecht zur Längsachse 16 und senkrecht zur Zeichnungsebene der Fig. 1 orientiert ist. Die dritten Abschnitte 24 sind axial mittig angeordnet und bilden eigentlich nur einen zusammenhängenden dritten Abschnitt 24. Die zweiten Abschnitte 22 sind in der axialen Richtung 44 zwischen den jeweiligen ersten und dritten Abschnitten 20 und 24 angeordnet.

Im Bereich der zweiten Abschnitte 22 sind exemplarisch innenumfänglich und außenumfänglich Nuten 26 ausgebildet, um einen Kraftfluss durch das System 10, insbesondere durch den Hülsenkörper 14 zu dirigieren bzw. zu lenken. Die Nuten 26 können innen- und/oder außenumfänglich vorgesehen sein. Der Kraftfluss ist in der Fig. 1 durch Pfeile angedeutet. Die Verlängerungen der Kraftpfeile F stellen einen allgemeinen Kraftfluss dar. Die weiteren Z-förmigen angeordneten Pfeile im linken oberen Bereich der Fig. 1 stellen den Kraftfluss unter Scherung dar.

Die Kraft F wird in den dritten Abschnitt 24 eingeleitet und im zweiten Abschnitt 22 mittels mindestens einer Messzelle 30 gemessen, die in der Fig. 1 durch eine Strichlinie angedeutet ist und nachfolgend noch näher beschrieben wird. Die ersten Abschnitte 20 dienen als Lagerzonen zum Ausleiten der Kraft F. Die ersten Abschnitte 20 sind beispielsweise in einem (nicht dargestellten) Maschinengestell gelagert, das die von außen wirkende Kraft F aufnimmt.

In der Fig. 1 sind zwei außenumfängliche Nuten 26-1 und 26-2 sowie zwei innenumfängliche Nuten 26-3 und 26-4 vorgesehen. Es versteht sich, dass das System 10 auch mit nur einer einzigen außenumfänglichen Nut 26 oder einer einzigen innenumfänglichen Nut 26 funktionieren würde.

Im Bereich der Nuten 26 ist eine Wandstärke des Hülsenkörpers 14 in der radialen Richtung 42 im Vergleich zu den ersten Abschnitten 20 und dem dritten Abschnitt 24 reduziert. Dies äußert sich in Form von Stufen 28. Die außenumfängliche Nut 26-1 weist, vom ersten Abschnitt von axial außen kommend, eine erste Stufe 28-1 auf, wo eine Außenwandung 32 des Hülsenkörpers 14 radial nach innen gerichtet ist, sich dann vorzugsweise parallel zur Längsachse 16 im zweiten Abschnitt 22 erstreckt, um am Ende des zweiten Abschnitts 22 wieder radial nach außen in Form einer Stufe 28-2 in den dritten Abschnitt 24 überzugehen, der sich wiederum parallel zur Längsachse 16 erstreckt. Analoges gilt für die anderen Nuten 26-2 bis 26-4.

Der Hülsenkörper 14 der Fig. 1 kann z.B. geschmiedet oder durch spanende Bearbeitung eines hohlzylindrischen Werkstücks hergestellt werden, indem die Außennuten 26-1 und 26-2 radial von außen ausgebildet werden, die Innennuten 26-3 und 26-2 radial von innen ausgebildet werden und die Wandstärke in der radialen Richtung 42 des dritten Abschnitts 24 radial von innen reduziert wird, um einen Verformungsraum 36 zwischen dem Bolzenkörper 12 und dem Hülsenkörper 14 im Inneren des Systems 10 auszubilden.

Eine Innenwandung 34 des Hülsenkörpers 14 erstreckt sich im Bereich des dritten Abschnitts 24 im Wesentlichen parallel zur Längsachse 16. Eine Ausnahme davon bildet lediglich mindestens ein Vorsprung 40, der in einem axialen Bereich 38 vorgesehen ist, wo der dritte Abschnitt 24 angeordnet ist. In der Fig. 1 ist exemplarisch lediglich ein einziger Vorsprung 40 gezeigt, der sich vollumfänglich entlang der Umfangsrichtung 46 erstreckt und der in der radialen Richtung 42 aus dem dritten Abschnitt 24 des Hülsenkörpers 14 in Richtung des Bolzenkörpers 12 vorsteht. Der Vorsprung 40 berührt den Bolzenkörper 12 in einem unbelasteten Zustand nicht. Der Vorsprung 40 dient als mechanischer Anschlag in der radialen Richtung 42, sobald die Kraft F einen Überlast-Schwellenwert (z.B. 150% der Nennlast) überschreitet. Ein radiales Spiel zwischen dem Vorsprung 40 und dem Bolzenkörper 12 ist so gewählt, dass der Vorsprung 40 den Bolzenkörper 12 aufgrund einer Verformung berührt, sobald der Überlast-Schwellenwert erreicht ist. Auf diese Weise wird verhindert, dass der Hülsenkörper 14 bei Überlast über eine mechanische Grenze hinaus verformt wird, was eine dauerhafte Beschädigung der Messzelle 30 oder eine Verschiebung eines Nullpunkts eines Messsignals der Messzelle 30 mit sich bringen würde.

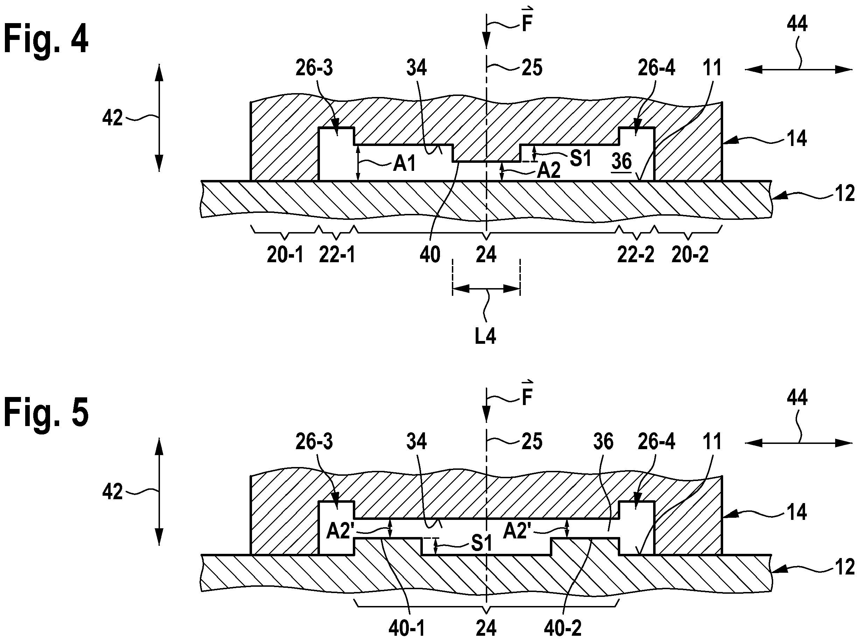

Es versteht sich, dass mehr als ein Vorsprung 40 vorgesehen sein kann. Auch ist klar, dass die in der Fig. 1 axial mittige Anordnung des Vorsprungs 40 nicht zwingend erforderlich ist. Der Vorsprung 40 kann Teil des Hülsenkörpers 14 (Fig. 1), des Bolzenkörpers 12 oder des Hülsenkörpers 14 und des Bolzenkörpers 12 sein, wie es nachfolgend unter Bezugnahme auf die Fig. 4 bis 6 noch näher erläutert werden wird. Der oder die Vorsprünge 40 sind derart im Bereich 38 angeordnet, dass sich der Bolzenkörper 12 und der dritte Abschnitt 24 bei Überlast nur über die Vorsprünge 40 berühren.

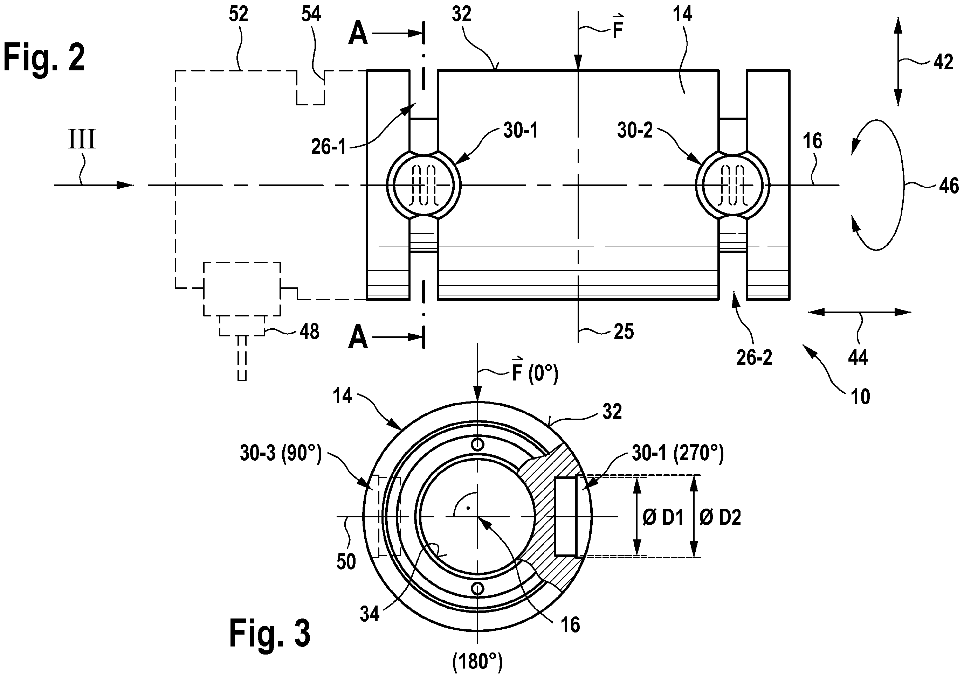

Der Bolzenkörper 12 ist formschlüssig im ersten Abschnitt 20 des Hülsenkörpers 14 angeordnet. Je nach Anwendung ist der Bolzenkörper 12 drehfest oder lose drehend im ersten Abschnitt 20 gelagert, wie es unter Bezugnahme auf Fig. 2 noch näher erläutert werden wird.

Der erste Abschnitt 20 weist eine axiale Länge L1 auf. Der zweite Abschnitt 22 weist eine axiale Länge L2 auf. Der dritte Abschnitt 24 weist eine axiale Länge L3 entsprechend dem Bereich 38 auf. Der erste Abschnitt 20 liegt axial außen. An den ersten Abschnitt 20 schließt sich in der axialen Richtung 44 der zweite Abschnitt 22 an. An den zweiten Abschnitt 22 schließt sich in der axialen Richtung 44 der dritte Abschnitt 24 an.

Fig. 2 zeigt eine perspektivische Seitenansicht des Systems 10 der Fig. 1 und dient insbesondere zur Erläuterung der Anordnung der Messzellen 30 in Bezug auf das gesamte System 10.

Das System 10 der Fig. 1 und 2 weist exemplarisch vier Messzellen 30 auf, von denen in der Fig. 2 lediglich eine erste Messzelle 30-1 und zweite Messzelle 30-2 erkennbar sind. Die restlichen Messzellen 30-3 und 30-4 sind diametral gegenüberliegend angeordnet und deshalb in der Fig. 2 nicht zu erkennen.

Bei den Messzellen 30 handelt es sich um beispielsweise kreisrunde Vertiefungen im Hülsenkörper 14, wie es sich aus der teilweise geschnitten dargestellten Frontalansicht der Fig. 3 entlang des Pfeils III der Fig. 2 ergibt. In der Fig. 3 blickt man axial auf die Stirnseite(n) des Hülsenkörpers 14, wobei der Bolzenkörper 12 in der Fig. 3 nicht dargestellt ist.

In der rechten Hälfte der Fig. 3 ist die erste Messzelle 30-1 geschnitten dargestellt. Man erkennt, dass es sich bei der Messzelle 30-1 um eine radiale kreisrunde Vertiefung im Hülsenkörper 14 handelt. Eine radiale Tiefe der Vertiefung ist so gewählt, dass der zweite Abschnitt 22 (vergleiche Fig. 1) vorzugsweise nicht in Richtung des Verformungsraums 36 durchbrochen wird, damit der Kraftfluss kontinuierlich vom dritten Abschnitt 24 in den ersten Abschnitt 20 geleitet werden kann. An einem nicht näher bezeichneten Boden der Vertiefung ist ein (nicht dargestellter) Kraftmesssensor, vorzugsweise in Form eines DMS, angebracht. Der DMS liefert ein zur mechanischen Verformung des Hülsenkörpers 14 proportionales elektrisches Signal an einen Anschluss 48, der exemplarisch in der Fig. 2 in Form einer Strichlinie als externes (optionales) Element angedeutet ist. Es versteht sich, dass der Querschnitt der Vertiefung der Messzellen 30 nicht zwingend kreisrund sein muss.

Wie bereits erwähnt, sind die Messzellen 30 paarweise, vorzugsweise diametral, angeordnet, wobei beispielsweise die Messzellen 30-1 und 30-3 ein Messzellenpaar bilden, wie in Fig. 3 gezeigt. Die Kraft F wirkt in einer Vorzugsrichtung (0°) auf das System 10 ein. Die Messzellen 30-1 und 30-3 sind vorzugsweise jeweils um 90° versetzt zur Vorzugsrichtung angeordnet. Die Messzellen 30-1 und 30-3 sind dann entlang einer virtuellen Verbindungslinie 50 angeordnet, die senkrecht zur Vorzugsrichtung orientiert ist. Es versteht sich, dass auch andere vorgegebene Winkel möglich sind, die von 90 Grad abweichen.

Zurückkehrend zur Fig. 2 ist in der linken Hälfte ein optionales Anbauelement 52 durch eine Strichlinie gezeigt. Das Anbauelement 52 kann Teil des Hülsenkörpers 14 oder des Bolzenkörpers 12 sein. Das Anbauelement 52 kann eine Ausnehmung 54 aufweisen, um das System 10 drehfest mit dem nicht dargestellten Maschinengestell oder die Körper 12 und 14 drehfest miteinander zu verbinden.

Fig. 4 zeigt eine Teilansicht einer Schnittdarstellung des Verformungsraums 36 gemäß der Ausführungsform der Fig. 1. Der Vorsprung 40 ist Teil des Hülsenkörpers 14. Es ist nur ein Vorsprung 40 vorgesehen. Der Vorsprung 40 steht radial nach innen aus dem dritten Abschnitt 24 radial in Richtung des Hülsenkörpers 12 vor. Der Vorsprung 40 weist eine Wandstärke S1 auf und erstreckt sich parallel zur Mantelfläche 11 des Hülsenkörpers 12, die sich wiederum im Bereich der Abschnitte 20-24 parallel zur Längsachse 16 (hier nicht dargestellt) erstreckt. Der Vorsprung 40 weist eine axiale Länge L4 auf. Der Vorsprung 40 weist einen radialen Abstand A2 zur Mantelfläche 11 auf. Im Übrigen weist der dritte Abschnitt 24 einen axialen Abstand A1 zur Mantelfläche 11 auf. Der radiale Abstand A1 entspricht der Summe der Wandstärke S1 und des radialen Abstands A2.

Die Fig. 4 zeigt einen unbelasteten Zustand des Systems 10, in welchem die Kraft F nicht wirkt. Wenn die Kraft F wirkt und den Überlast-Schwellenwert überschreitet, verformt sich insbesondere der dritte Abschnitt 24 derart, dass der Vorsprung 40 sich radial in Richtung der Mantelfläche 11 des Hülsenkörpers 12 bewegt und dort anschlägt. Wenn der Vorsprung 40 an die Mantelfläche 11 anschlägt, kann sich der Hülsenkörper 14 nicht weiter verformen, insbesondere nicht innerhalb der zweiten Abschnitten 22, wo die Messzellen 30 angeordnet sind. Die Verformung des Hülsenkörpers 14 kann also nicht derart stark ausfallen, dass sich die Materialeigenschaften des Systems dauerhaft und bleibend verändern. Der Nullpunkt des Messsignals verschiebt sich nicht. Der DMS wird nicht mechanisch beschädigt. Auf diese Weise ist ein Überlastschutz realisiert.

Fig. 5 zeigt eine ähnliche partielle Schnittansicht wie die Fig. 4, wobei in der Fig. 5 zwei Vorsprünge 40-1 und 40-2 im dritten Bereich 38 vorgesehen sind, die sich in der radialen Richtung 42 in den Verformungsraum 36 hinein erstrecken. Die Vorsprünge 40-1 und 40-2 sind spiegelbildlich zur Symmetrieebene 25 angeordnet und schließen direkt an die zweiten Abschnitte 22 an. Die Vorsprünge 40-1 und 40-2 sind hier Teil des Bolzenkörpers 12. In der Fig. 5 ist wiederum der unbelastete Zustand gezeigt. Wenn die Kraft F den Überlast-Schwellenwert überschreitet, wird der Hülsenkörper 14 derart radial in den Verformungsraum 36 hinein verformt, dass die Vorsprünge 40-1 und 40-2 des Bolzenkörpers 12 in Kontakt mit dem dritten Abschnitt 24 des Hülsenkörpers 14 treten. Die radialen Abstände A2' der Vorsprünge 40-1 und 40-2 relativ zum dritten Abschnitt 24 des Hülsenkörpers 14 sind vorzugsweise so gewählt, dass der dritte Abschnitt 24 zwischen den Vorsprüngen 40-1 und 40-2 nicht in Kontakt mit dem Bolzenkörper 12 tritt.

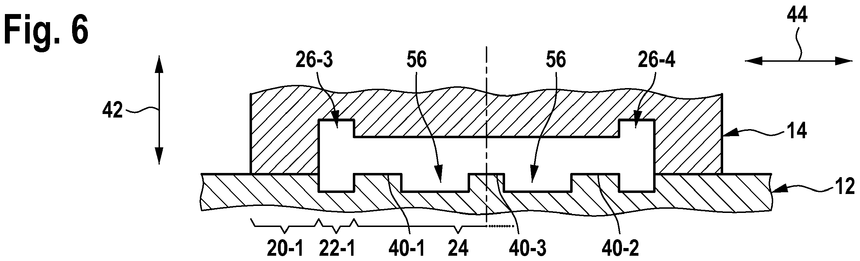

Fig. 6 zeigt eine partielle Schnittansicht einer weiteren Ausführungsform, bei der drei Vorsprünge 40-1 bis 40-3 im Bolzenkörper 12 vorgesehen sind, indem Vertiefungen 56 im Bolzenkörper 12 vorgesehen sind. Der erste und zweite Vorsprung 40-1 und 40-2 sitzen axial außen im Bereich 38 des dritten Abschnitts 24. Der dritte Vorsprung 40-3 sitzt axial mittig. Die hier nicht näher bezeichneten Radialabstände A zwischen dem Bolzenkörper 12 und dem Hülsenkörper 14 sind zur Erfüllung des Überlastschutzes entsprechend gewählt.

Es versteht sich, dass der oder die Vorsprünge 40 nicht zwingend entlang der Umfangsrichtung 46 vollständig umlaufend ausgebildet sein müssen. Die Vorsprünge 40 können auch punktuell bzw. diskret bzw. lokal begrenzt in der Umfangsrichtung 46 ausgebildet sein. In diesem Fall sollten die Vorsprünge 40 in der Verlängerung der Vorzugsrichtung (vergleiche Fig. 3) vorgesehen werden, vorzugsweise auch diametral gegenüberliegend, um eventuelle Gegenkräfte zu kompensieren, die entgegengesetzt der Vorzugsrichtungen orientiert sind.

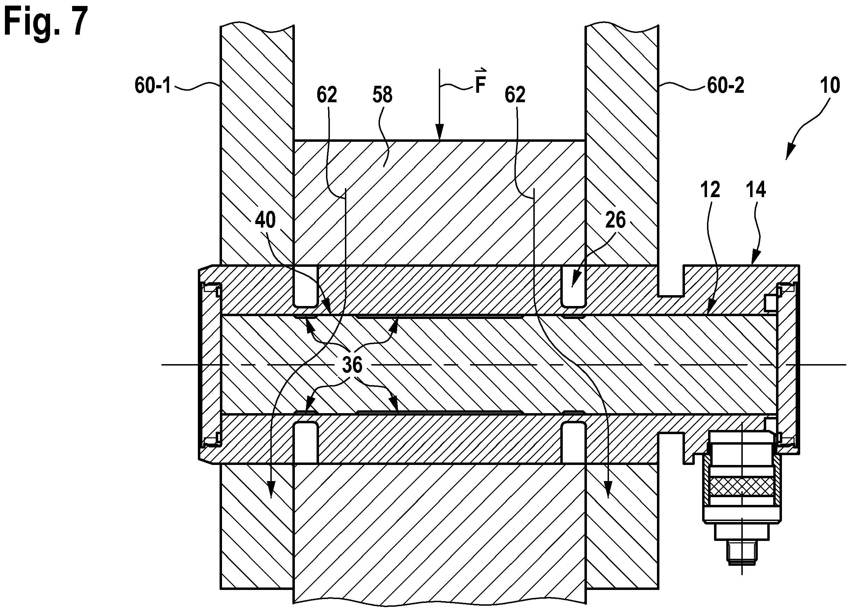

Fig. 7 zeigt eine Schnittansicht einer weiteren Ausführungsform eines Kraftaufnehmersystems 10 in einem Überlastzustand. Das System 10 ist messachsenartig ausgebildet. Der Hülsenkörper 14 berührt den Bolzenkörper 12 über die Vorsprünge 40. Die Kraft F wird axial mittig über ein Element 58 eingeleitet, das zwischen zwei als Auflager dienenden Maschinengestellteilen 60 angeordnet ist. Ein Kraftfluss im Überlastzustand ist durch Pfeile 62 angedeutet.

### Bezugszeichenliste:

- 9: Oberfläche von 12
- 10: Kraftaufnehmersystem / System
- 11: Mantelfläche von 12
- 12: Bolzenkörper
- 13: Stirnfläche von 12
- 14: Hülsenkörper
- 16: Längsachse
- F: Kraft
- 18: Stirnseiten von 14 / Stirnfläche
- 20: 1. Abschnitt von 14
- 22: 2. Abschnitt von 14
- 24: 3. Abschnitt von 14
- 25: Symmetrieebene
- 26: Nut
- 28: Stufe(n)
- 30: Messzelle
- L: axiale Längen
- 32: Außenwandung von 14
- 34: Innenwandung von 14
- 36: Verformungsraum
- 38: Bereich
- 40: Vorsprung
- 42: radiale Richtung
- 44: axiale Richtung
- 46: Umfangsrichtung
- 48: Anschluss
- 52: Anbauelement
- 54: Ausnehmung
- 56: Vertiefung
- 58: Element
- 60: Maschinengestellteile
- 62: Kraftfluss im Überlastzustand

## Patentansprüche

1. Kraftaufnehmersystem (10) zum Messen einer Kraft (F) unter Scherung, wobei die Kraft (F) von außen in einer radialen Richtung (42) quer auf eine Längsachse (16) des Kraftaufnehmersystems (10) wirkt, mit:
einem zylindrischen, radial innen positionierten Bolzenkörper (12); und
einem hohlzylindrischen, radial außen positionierten Hülsenkörper (14), der sich koaxial zur Längsachse (16) erstreckt und der zur koaxialen Aufnahme des Bolzenkörpers (12) eingerichtet ist,
wobei der Hülsenkörper (14) aufweist:
zumindest einen stirnseitigen, in einer axialen Richtung (44) außen liegenden ersten Abschnitt (20) zum Lagern des Kraftaufnehmersystems (10);
mindestens einen zweiten Abschnitt (22) zum Messen der Kraft (F); und
mindestens einen dritten Abschnitt (24) zum radialen Einleiten der Kraft (F) in das Kraftaufnehmersystem (10);
wobei der Bolzenkörper (12) formschlüssig im ersten Abschnitt (20) positioniert ist und wobei eine Oberfläche (9) des Bolzenkörpers (12) eine in einer Umfangsrichtung (46) orientierte Mantelfläche (11) und zwei sich axial gegenüberliegende Stirnflächen (13) aufweist;
wobei der zweite Abschnitt (22) radial außen und/oder innen eine umfänglich verlaufende Nut (26) aufweist, so dass in axialer Richtung jeweils eine Stufe (28-1, 28-3; 28-2. 28-4) zwischen dem ersten Abschnitt (20) und dem zweiten Abschnitt (22) sowie zwischen dem zweiten Abschnitt (22) und dem dritten Abschnitt (24) ausgebildet ist, und wobei der zweite Abschnitt (22) zur radialen Aufnahme von mindestens einer Messzelle (30) eingerichtet ist;
wobei der dritte Abschnitt (24) eine axiale Länge (L3), eine radial außen liegende Außenwandung (32) und eine radial innen liegenden Innenwandung (34) aufweist und wobei der dritte Abschnitt (24) in einem unbelasteten Zustand, in welchen die Kraft (F) nicht wirkt, über seine gesamte axiale Länge (L3) radial zum Bolzenkörper (12) beabstandet ist, so dass der Bolzenkörper (12) berührungslos innerhalb des dritten Abschnitts (24) positioniert ist,
wobei der zweite Abschnitt (22), der dritte Abschnitt (24) und der Bolzenkörper (12) zwischen sich einen radial und axial innerhalb des Kraftaufnehmersystems (10) angeordneten Verformungsraum (36) definieren, in welchen der Hülsenkörper (14) in einem belasteten Zustand, in welchem die Kraft (F) auf das Kraftaufnehmersystem (10) wirkt, ausweichen kann, um den zweiten Abschnitt (22) unter Scherung zu verformen;
**dadurch gekennzeichnet, dass**
die Innenwandung (34) des dritten Abschnitts (24) - oder ein Bereich (38) der Mantelfläche (11) des Bolzenkörper (12), der radial gegenüberliegend zur Innenwandung (34) des dritten Abschnitts (24) positioniert ist - zumindest einen radial in den Verformungsraum (36) vorstehenden Vorsprung (40) aufweist, so dass die Innenwandung (34) des dritten Abschnitts (24) über den Vorsprung (40) mit der Mantelfläche (11) des Bolzenkörpers (12) in Kontakt tritt, wenn die Kraft (F) einen Überlast-Schwellenwert erreicht.

2. Kraftaufnehmersystem (10) nach Anspruch 1, wobei jeder der radialen Vorsprünge (40) in der Umfangsrichtung (46) kontinuierlich ausgebildet ist.

3. Kraftaufnehmersystem (10) nach Anspruch 1, wobei der Hülsenkörper (14) und der Bolzenkörper (12) drehfest zueinander positioniert sind.

4. Kraftaufnehmersystem (10) nach Anspruch 3, wobei der mindestens eine radiale Vorsprung (40) in der Umfangsrichtung (46) punktuell ausgebildet ist und entlang einer Vorzugsrichtung der Kraft (F) angeordnet ist.

5. Kraftaufnehmersystem (10) nach einem der Ansprüche 1 bis 4, wobei der Hülsenkörper (14) zwei erste Abschnitte (20) und zwei zweite Abschnitte (22) aufweist, die spiegelsymmetrisch zum dritten Abschnitt (24) angeordnet sind, wobei der dritte Abschnitt (24) axial mittig zwischen den zweiten Abschnitten (22) angeordnet ist.

6. Kraftaufnehmersystem (10) nach Anspruch 5, wobei ein erster und ein zweiter radialer Vorsprung (40) vorgesehen sind, die in der axialen Richtung (44) direkt auf die zweiten Abschnitte (22) folgen.

7. Kraftaufnehmersystem (10) nach einem der Ansprüche 5 oder 6, wobei mindestens vier Messzellen (30) vorgesehen sind und wobei jeder der zweiten Abschnitte (22) zur Aufnahme von mindestens zwei der mindestens vier Messzellen (30) eingerichtet ist.

8. Kraftaufnehmersystem (10) nach Anspruch 7, wobei sich die mindestens zwei der mindestens vier Messzellen (30) jeweils diametral zur Längsachse (16) gegenüberliegen.

9. Kraftaufnehmersystem (10) nach Anspruch 7 oder 8, wobei die mindestens zwei der mindestens vier Messzellen (30) jeweils in der Umfangsrichtung (46) so angeordnet sind, dass eine virtuelle Verbindungslinie zwischen den mindestens zwei der mindestens vier Messzellen (30) einen rechten Winkel mit der Kraft (F) definiert, wenn man das Kraftaufnehmersystem (10) in axialer Richtung (44) betrachtet.

10. Kraftaufnehmersystem (10) nach einem der Ansprüche 1 bis 9, das eine zweiteilige Messachse ist, wobei der Hülsenkörper (14) den Bolzenkörper (12) koaxial in sich aufnimmt.

11. Hülsenkörper (14) für ein Kraftaufnehmersystem (10) nach einem der Ansprüche 1 bis 10 zum Messen einer Kraft (F) unter Scherung, wobei die Kraft (F) vom außen in einer radialen Richtung (42) quer auf eine Längs achse (16) des Kraftaufnehmersystems (10)wirkt, wobei der Hülsenkörper: hohlzylindrisch ist; sich koaxial zur Längsachse (16) erstreckt; zur koaxialen Aufnahme eines Bolzenkörpers (12) eingerichtet ist; zumindest einen stirnseitigen, in einer axialen Richtung (44) außen liegenden ersten Abschnitt (20)zum Lagern des Kraftaufnehmersystems (10) aufweist;
mindestens einen zweiten Abschnitt (22) zum Messen der Kraft (F) aufweist; und
mindestens einen dritten Abschnitt (24) zum radialen Einleiten der Kraft (F) in das Kraftaufnehmersystem (10) aufweist;
wobei der zweite Abschnitt (22) radial außen und/oder innen eine umfänglich verlaufende Nut (26) aufweist, so dass in axialer Richtung jeweils eine Stufe (28-1, 28-3; 28-2, 28-4) zwischen dem ersten Abschnitt (20) und dem zweiten Abschnitt (22) sowie zwischen dem zweiten Abschnitt (22) und dem dritten Abschnitt (24) ausgebildet ist;
wobei der zweite Abschnitt (22) zur radialen Aufnahme von mindestens einer Messzelle (30) eingerichtet ist;
wobei der dritte Abschnitt (24) eine axiale Länge (L3), eine radial außen liegende Außenwandung (32) und eine radial innen liegenden Innenwandung (34) aufweist; und
wobei in einem Zustand, in welchem der Bolzenkörper (12) im Hülsenkörper (14) positioniert ist:
der dritte Abschnitt (24) in einem unbelasteten Zustand, in welchen die Kraft (F) nicht wirkt, über seine gesamte axiale Länge (L3) radial zum Bolzenkörper (12) beabstandet ist, so dass der Bolzenkörper (12) berührungslos innerhalb des dritten Abschnitts (24) positioniert ist,
der zweite Abschnitt (22), der dritte Abschnitt (24) und der Bolzenkörper (12) zwischen sich einen radial und axial innerhalb des Kraftaufnehmersystems (10) angeordneten Verformungsraum (36) definieren, in welchen der Hülsenkörper (14) in einem belasteten Zustand, in welchem die Kraft (F) auf das Kraftaufnehmersystem (10) wirkt, ausweichen kann, um den zweiten Abschnitt (22) unter Scherung zu verformen;
**dadurch gekennzeichnet, dass**
die Innenwandung (34) des dritten Abschnitts (24) zumindest einen radial in den Verformungsraum (36) vorstehenden Vorsprung (40) aufweist, so dass die Innenwandung (34) des dritten Abschnitts (24) über den Vorsprung (40) mit der Mantelfläche (11) Bolzenkörpers (12) in Kontakt tritt, wenn die Kraft (F) einen Überlast-Schwellenwert erreicht.

12. Bolzenkörper (12) für ein Kraftaufnehmersystem (10) nach einem der Ansprüche 1 bis 10 zum Messen einer Kraft (F) unter Scherung, wobei die Kraft (F) von außen in einer radialen Richtung (42) quer auf eine Längsachse (16) des Kraftaufnehmersystems (10) wirkt, wobei der Bolzenkörper (12); zylindrisch ist; radial innerhalb eines Hülsenkörpers (14) positionierbar ist; formschlüssig im ersten Abschnitt (20) des Hülsenkörpers (14) positionierbar ist; und
eine Oberfläche (9) aufweist, die eine in einer Umfangsrichtung (46) orientierte Mantelfläche (11) und zwei sich axial gegenüberliegende Stirnflächen (13) aufweist;
**dadurch gekennzeichnet, dass**
ein Bereich (38) der Mantelfläche (11) des Bolzenkörper (12), der radial gegenüberliegend zur Innenwandung (34) des dritten Abschnitts (24) positionierbar ist, zumindest einen radial in den Verformungsraum (36) vorstehenden Vorsprung (40-1, 40-2, 40-3) aufweist, so dass die Innenwandung (34) des dritten Abschnitts (24) des Hülsenkörpers (14) über den Vorsprung (40-1, 40-2, 40-3) mit der Mantelfläche (11) des Bolzenkörpers (12) in Kontakt tritt, wenn die Kraft (F) einen Überlast-Schwellenwert erreicht.

## Claims

1. A force-transducer system (10) for measuring a force (F) under shearing, wherein the force (F) acts from the outside in a radial direction (42) transversally on a longitudinal axis (16) of the force-transducer system (10), comprising:
a cylindrical pin body (12) radially positioned internally; and
a hollow-cylindrical sleeve body (14) radially positioned externally, which extends coaxially to the longitudinal axis (16) and is configured to coaxially receive the pin body (12),
wherein the sleeve body (14) comprises:
at least one first section (20) for supporting the force-transducer system (10), which first section (20) is positioned externally in an axial direction (44) and arranged at a front end;
at least one second section (22) for measuring the force (F); and
at least one third section (24) for radially introducing the force (F) into the force-transducer system (10);
wherein the pin body (12) is positioned in a form-closed manner in the first section (20), and wherein a surface (9) of the pin body (12) comprises a circumferential surface (11) being orientated in a circumferential direction (46), and two front faces (13) axially arranged oppositely;
wherein the second section (22) comprises a radial outer and/or inner groove (26) running circumferentially so that respectively one step (28-1, 28-3; 28-2, 28-4) is formed in the axial direction between the first section (20) and the second section (22) as well as between the second section (22) and the third section (24), and wherein the second section (22) is configured to radially receive at least one measuring cell (30);
wherein the third section (24) comprises an axial length (L3), a radial outer outside wall (32), and a radial inner inside wall (34), and wherein the third section (24), in an unloaded state in which the force (F) does not act, is spaced radially along its entire axial length (L3) to the pin body (12) so that the pin body (12) is positioned in a contactless manner within the third section (24),
wherein the second section (22), the third section (24), and the pin body (12) define between each other a deformation space (36) arranged radially and axially within the force-transducer system (10), into which the sleeve body (14) can dodge in a loaded state in which the force (F) acts on the force-transducer system (10), for deforming the second section (22) under shearing;
**characterized in that**
the inside wall (34) of the third section (24) - or a region (38) of the circumferential surface (11) of the pin body (12) positioned radially oppositely to the inside wall (34) of the third section (24) - comprises at least one projection (40) projecting radially into the deformation space (36) so that the insinde wall (34) of the third section (24) gets in contact with the circumferential surface (11) of the pin body (12) via the projection (40), if the force (F) reaches an over-load threshold value.

2. The force-transducer system (10) of claim 1, wherein each of the radial projections (40) is formed continuously in the circumferential direction (46).

3. The force-transducer system (10) of claim 1, wherein the sleeve body (14) and the pin body (12) are positioned rotationally fixed to each other.

4. The force-transducer system (10) of claim 3, wherein the at least one radial projection (40) in the circumferential direction (46) is formed point by point, and is arranged along a preference direction of the force (F).

5. The force-transducer system (10) of any of claims 1 to 4, wherein the sleeve body (14) comprises two first sections (20) and two second sections (22) being arranged in mirror symmetry relative to the third section (24), wherein the third section (24) is axially arranged centrally between the second section (22).

6. The force-transducer system (10) of claim 5, wherein first and second radial projections (40) are provided directly adjacent to the second section (22) in the axial direction (44).

7. The force-transducer system (10) of any of claims 5 or 6, wherein at least four measuring cells (30) are provided, and wherein each of the second sections (22) is configured for receiving at least two of the at least four measuring cells (30).

8. The force-transducer system (10) of claim 7, wherein the at least two of the at least four measuring cells (30) are respectively arranged diametrally oppositely to the longitudinal axis (16).

9. The force-transducer system (10) of claim 7 or 8, wherein the at least two of the at least four measuring cells (30) are respectively arranged in the circumferential direction (46) such that a virtual connection line between the at least two the at least four measuring cells (30) define a rectangular angle together with the force (F) if the force transducer system (10) is viewed along the axial direction (44).

10. The force-transducer system (10) of any of claims 1 to 9 which is a two-part measuring axis, wherein the sleeve body (14) receives the pin body (12) coaxially in its interior.

11. A sleeve body (14) for a force-transducer system (10) of any of claims 1 to 10 for measuring a force (F) under shearing, wherein the force (F) acts from the outside in a radial direction (42) transversally on a longitudinal axis (16) of the force-transducer system (10), wherein the sleeve body:
is a hollow cylinder;
extends coaxially to the longitudinal axis (16);
is configured for coaxially receiving a pin body (12);
comprises at least one first front-end section (20) for supporting the force-transducer system (10), which first section is located externally in an axial direction (44);
comprises at least one second section (22) for measuring the force (F); and
comprises at least one third section (24) for radially introducing the force (F) into the force-transducer system (10);
wherein the second section (22) comprises a radial outer and/or inner groove (26) running circumferentially so that in the axial direction respectively one step (28-1, 28-3; 28-2, 28-4) is formed between the first section (20) and the second section (22) as well as between the second section (22) and the third section (24);
wherein the second section (22) is configured for radially receiving at least one measuring cell (30);
wherein the third section (24) comprises an axial length (L3), a radial outer outside wall (32), and a radial inner inside wall (34); and
wherein, in a state in which the pin body (12) is positioned in the sleeve body (14),:
the third section (24) is spaced radially, in an unloaded state in which the force (F) does not act, along its entire axial length (L3) to the pin body (12) so that the pin body (12) is positioned in a contactless manner within the third section (24),
the second section (22), the third section (24), and the pin body (12) define between each other a deformation space (36) arranged radially and axially within the force-transducer system (10), into which deformation space (36) the sleeve body (14) can dodge in a loaded state, in which the force (F) acts on the force-transducer system (10), for deforming the second section (22) under shearing;
**characterized in that**
the inside wall (34) of the third section (24) comprises at least one projection (40) radially projecting into the deformation space (36) so that the inside wall (34) of the third section (24) gets in contact with the circumferential surface (11) of the pin body (12) via the projection (40) if the force (F) reaches an over-load threshold value.

12. A pin body (12) for a force-transducer system (10) of any of the claims 1 to 10 for measuring a force (F) under shearing, wherein the force (F) acts from the outside in a radial direction (42) transversally on a longitudinal axis (16) of the force transducer system (10), wherein the pin body (12):
is cylindrical;
is positionable radially within a sleeve body (14);
is positionable in a form-closed manner within the first section (20) of the sleeve body (14); and
comprises a surface (9) having a circumferential surface (11), which is orientated in a circumferential direction (46), and two axially oppositely arranged front faces (13);
**characterized in that**
a region (38) of the circumferential surface (11) of the pin body (12), which is positionable radially opposite to the inside wall (34) of the third section (24), comprises at least one projection (40-1, 40-2, 40-3) radially projecting into the deformation space (36) so that the inside wall (34) of the third section (24) of the sleeve body (14) gets in contact with the circumferential surface (11) of the pin body (12) via the projection (40-1, 40-2, 40-3) if the force (F) reaches an over-load threshold value.

## Revendications

1. Système de transducteur de force (10) pour mesurer une force (F) sous cisaillement, la force (F) agissant depuis l'extérieur dans une direction radiale (42) transversalement à un axe longitudinal (16) du système de transducteur de force (10), comprenant :
un corps de goujon cylindrique (12), positionné radialement à l'intérieur ; et
un corps de douille cylindrique creux (14), positionné radialement à l'extérieur, qui s'étend coaxialement à l'axe longitudinal (16) et qui est prévu pour recevoir coaxialement le corps de goujon (12),
le corps de douille (14) présentant :
au moins une première portion (20) du côté frontal, située à l'extérieur dans une direction axiale (44) pour supporter le système de transducteur de force (10) ;
au moins une deuxième portion (22) pour mesurer la force (F) ; et
au moins une troisième portion (24) pour introduire radialement la force (F) dans le système de transducteur de force (10) ;
le corps de goujon (12) étant positionné par engagement par correspondance de formes dans la première portion (20) et une surface (9) du corps de goujon (12) présentant une surface d'enveloppe (11) orientée dans une direction périphérique (46) et deux surfaces frontales axialement opposées (13) ;
la deuxième portion (22) présentant radialement à l'extérieur et/ou à l'intérieur une rainure (26) s'étendant sur la périphérie, de telle sorte qu'un gradin (28-1, 28-3 ; 28-2. 28-4) soit à chaque fois réalisé dans la direction axiale entre la première portion (20) et la deuxième portion (22) ainsi qu'entre la deuxième portion (22) et la troisième portion (24), et la deuxième portion (22) étant prévue pour recevoir radialement au moins une cellule de mesure (30) ;
la troisième portion (24) présentant une longueur axiale (L3), une paroi extérieure située radialement à l'extérieur (32) et une paroi intérieure située radialement à l'intérieur (34) et la troisième portion (24), dans un état non sollicité, dans lequel la force (F) n'agit pas, étant espacée radialement du corps de goujon (12) sur toute sa longueur axiale (L3) de telle sorte que le corps de goujon (12) soit positionné sans contact à l'intérieur de la troisième portion (24),
la deuxième portion (22), la troisième portion (24) et le corps de goujon (12) définissant entre eux un espace de déformation (36) disposé radialement et axialement à l'intérieur du système de transducteur de force (10), dans lequel espace de déformation le corps de douille (14) peut s'échapper, dans un état sollicité dans lequel la force (F) agit sur le système de transducteur de force (10), afin de déformer la deuxième portion (22) sous cisaillement ;
**caractérisé en ce que**
la paroi intérieure (34) de la troisième portion (24) - ou une région (38) de la surface d'enveloppe (11) du corps de goujon (12) qui est positionnée radialement à l'opposé de la paroi intérieure (34) de la troisième portion (24) - présente au moins une saillie (40) faisant saillie radialement dans l'espace de déformation (36) de telle sorte que la paroi intérieure (34) de la troisième portion (24) vienne en contact par le biais de la saillie (40) avec la surface d'enveloppe (11) du corps de goujon (12) lorsque la force (F) atteint une valeur de seuil de surcharge.

2. Système de transducteur de force (10) selon la revendication 1, dans lequel chacune des saillies radiales (40) est réalisée de manière continue dans la direction périphérique (46).

3. Système de transducteur de force (10) selon la revendication 1, dans lequel le corps de douille (14) et le corps de goujon (12) sont positionnés de manière solidaire en rotation l'un par rapport à l'autre.

4. Système de transducteur de force (10) selon la revendication 3, dans lequel l'au moins une saillie radiale (40) est réalisée sous forme ponctuelle dans la direction périphérique (46) et est disposée le long d'une direction préférentielle de la force (F).

5. Système de transducteur de force (10) selon l'une quelconque des revendications 1 à 4, dans lequel le corps de douille (14) présente deux premières portions (20) et deux deuxièmes portions (22) qui sont disposées avec une symétrie spéculaire par rapport à la troisième portion (24), la troisième portion (24) étant disposée axialement au centre entre les deuxièmes portions (22).

6. Système de transducteur de force (10) selon la revendication 5, dans lequel une première et une deuxième saillie radiale (40) sont prévues, lesquelles suivent directement les deuxièmes portions (22) dans la direction axiale (44).

7. Système de transducteur de force (10) selon l'une quelconque des revendications 5 ou 6, dans lequel au moins quatre cellules de mesure (30) sont prévues, et dans lequel chacune des deuxièmes portions (22) est prévue pour recevoir au moins deux des au moins quatre cellules de mesure (30).

8. Système de transducteur de force (10) selon la revendication 7, dans lequel les au moins deux parmi les au moins quatre cellules de mesure (30) sont à chaque fois diamétralement opposées par rapport à l'axe longitudinal (16).

9. Système de transducteur de force (10) selon la revendication 7 ou 8, dans lequel les au moins deux parmi les au moins quatre cellules de mesure (30) sont disposées à chaque fois dans la direction périphérique (46) de telle sorte qu'une ligne de connexion virtuelle entre les au moins deux des au moins quatre cellules de mesure (30) définisse un angle droit avec la force (F) lorsque l'on considère le système de transducteur de force (10) dans la direction axiale (44).

10. Système de transducteur de force (10) selon l'une quelconque des revendications 1 à 9, qui est un axe de mesure en deux parties, le corps de douille (14) recevant coaxialement en lui le corps de goujon (12).

11. Corps de douille (14) pour un système de transducteur de force (10) selon l'une quelconque des revendications 1 à 10, pour mesurer une force (F) sous cisaillement, la force (F) agissant depuis l'extérieur dans une direction radiale (42) transversalement sur un axe longitudinal (16) du système de transducteur de force (10), le corps de douille :
étant cylindrique creux ;
s'étendant coaxialement par rapport à l'axe longitudinal (16) ;
étant prévu pour recevoir coaxialement un corps de goujon (12) ;
présentant au moins une première portion frontale (20) située à l'extérieur dans une direction axiale (44) pour supporter le système de transducteur de force (10) ;
présentant au moins une deuxième portion (22) pour mesurer la force (F) ; et
présentant au moins une troisième portion (24) pour introduire radialement la force (F) dans le système de transducteur de force (10) ;
la deuxième portion (22) présentant une rainure (26) s'étendant sur la périphérie radialement à l'extérieur et/ou à l'intérieur, de telle sorte que dans la direction axiale, à chaque fois un gradin (28-1, 28-3 ; 28-2, 28-4) soit réalisé entre la première portion (20) et la deuxième portion (22) ainsi qu'entre la deuxième portion (22) et la troisième portion (24) ;
la deuxième portion (22) étant prévue pour recevoir radialement au moins une cellule de mesure (30) ;
la troisième portion (24) présentant une longueur axiale (L3), une paroi extérieure (32) située radialement à l'extérieur et une paroi intérieure (34) située radialement à l'intérieur ; et
dans un état dans lequel le corps de goujon (12) est positionné dans le corps de douille (14) :
la troisième portion (24), dans un état non sollicité dans lequel la force (F) n'agit pas, étant espacée radialement du corps de goujon (12) sur toute sa longueur axiale (L3) de telle sorte que le corps de goujon (12) soit positionné sans contact à l'intérieur de la troisième portion (24),
la deuxième portion (22), la troisième portion (24) et le corps de goujon (12) définissant entre eux un espace de déformation (36) disposé radialement et axialement à l'intérieur du système de transducteur de force (10), dans lequel espace de déformation le corps de douille (14) peut s'échapper, dans un état sollicité dans lequel la force (F) agit sur le système de transducteur de force (10), afin de déformer la deuxième portion (22) sous cisaillement ;
**caractérisé en ce que**
la paroi intérieure (34) de la troisième portion (24) présente au moins une saillie (40) faisant saillie radialement dans l'espace de déformation (36) de telle sorte que la paroi intérieure (34) de la troisième portion (24) vienne en contact par le biais de la saillie (40) avec la surface d'enveloppe (11) du corps de goujon (12) lorsque la force (F) atteint une valeur de seuil de surcharge.

12. Corps de goujon (12) pour un système de transducteur de force (10) selon l'une quelconque des revendications 1 à 10, pour mesurer une force (F) sous cisaillement, la force (F) agissant depuis l'extérieur dans une direction radiale (42) transversalement sur un axe longitudinal (16) du système de transducteur de force (10), le corps de goujon (12) :
étant cylindrique ;
pouvant être positionné radialement à l'intérieur d'un corps de douille (14) ;
pouvant être positionné par engagement par correspondance de formes dans la première portion (20) du corps de douille (14) ; et
présentant une surface (9) qui présente une surface d'enveloppe (11) orientée dans une direction périphérique (46) et deux surfaces frontales (13) opposées axialement ;
**caractérisé en ce**
**qu'**une région (38) de la surface d'enveloppe (11) du corps de goujon (12), qui peut être positionnée radialement à l'opposé de la paroi intérieure (34) de la troisième portion (24), présente au moins une saillie (40-1, 30-2, 40-3) faisant saillie radialement dans l'espace de déformation (36), de telle sorte que la paroi intérieure (34) de la troisième portion (24) du corps de douille (14) vienne en contact par le biais de la saillie (40-1, 40-2, 40-3) avec la surface d'enveloppe (11) du corps de goujon (12) lorsque la force (F) atteint une valeur de seuil de surcharge.
